# EUROPEAN PATENT APPLICATION

(11) **EP 1 168 778 A2**
(43) Date of publication of application: **02.01.2002**
(21) Application number: 01304658.6
(22) Date of filing: 25.05.2001
(51) Int. Cl.: H04M 1/03

(54) **An electronic device**

(30) Priority: 30.06.2000 GB 0016158
(71) Applicant: NOKIA MOBILE PHONES LTD., 02150 Espoo (FI)
(72) Inventor: Johnson, Keith, North Ascot, Berkshire SL5 8JX (GB); Charman, Neil, Sandhurst, Berkshire GU47 0ZZ (GB); Armstrong, Andrew, Hounslow, Middlesex TW3 2EY (GB)
(74) Representative: Read, Matthew Charles

(57) **Abstract**

An electronic device including a housing, a transducer and a retainer for mounting the transducer on the housing (11) is disclosed. The device includes co-operating means (21,28) on the housing (11) and on the retainer (26) for attaching the retainer (26) to the housing (11) over the transducer (16). The retainer (26) is preferably attached to the housing (11) with a bayonet type fastener so that rotation of the retainer (26) against spring pressure positions lugs (28) on the retainer (26) in slots (22) on the housing (11).

The present invention also discloses a housing (11) for a mobile telephone having a recess (39) therein and a cover (38) mounted on the housing (11) over the recess (39). The cover (38) and the housing (11) together form an acoustic duct in the region of the recess (39).

## Description

The present invention relates to the field of electronic devices such as mobile telephones.

Transducers that convert electrical signals into sound can be used as loudspeakers in conventional mobile telephones. As they are capable of generating sound of a relatively high acoustic volume, they can be used in "hands free" mobile telephones as the sound is of a volume that makes it unnecessary to place the telephone against the ear.

A transducer in a mobile telephone may be used to fulfil several functions in addition to the conversion of signals received by the telephone into speech so that the user can hear the person they are communicating with. For example, the transducer can also be used as a buzzer to alert the owner to an incoming telephone call. This type of transducer is referred to as multi-functional.

A conventional mobile telephone may be provided with two speakers mounted to the back and front covers of the telephone respectively. The speaker mounted to the front cover is capable of relatively low acoustic volume only and is used when the telephone is placed against the ear in a conventional manner. Holes are provided in the cover to allow transfer of sound through the cover. The speaker mounted to the rear cover is a transducer capable of relatively high acoustic volume to enable the telephone to be used "hands free", in which the user can hear a person speaking to them without placing the telephone against the ear. The telephone is provided with a button which switches the transducer on and activates the "hands free" mode.

It is desirable to keep the thickness of a mobile telephone to a minimum. This means that there is very limited space between components. For example, the gap between the top of the transducer which is usually mounted on the rear of the mobile telephone housing and the PCB components mounted on the front cover is normally only in the region of 0.5mm. This presents the problem of securely mounting the transducer to the inside of the cover as the gap is too small to enable the transducer to be located beneath, for example, spring clips moulded as part of the cover itself, unless the overall thickness of the mobile telephone is increased.

A further disadvantage with conventional mobile telephones is that the acoustic seal between the front of the transducer and the inside face of the cover to which it is mounted is poor, leading to inferior sound transfer through the cover. In addition, some of the sound generated by the transducer is transferred into the telephone cover itself causing it to vibrate leading to the introduction of resonance into the assembly and a reduction in sound quality.

According to the present invention, there is provided an electronic device comprising a housing, a transducer and a retainer for mounting the transducer on the housing, the housing and retainer including co-operating means for attaching the retainer to the housing over the transducer.

Preferably, the co-operating means are configured so that, when the retainer is placed on the housing over the transducer with said co-operating means in engagement, rotation of the retainer locks it to the housing and mounts the transducer thereto. This is conveniently achieved by means of a bayonet type fitting arrangement.

The retainer preferably has a substantially planar portion for contact with the upper surface of the transducer, most preferably, the substantially planar portion is an annular ring. As the part of the retainer in contact with the upper surface of the transducer is planar, the overall thickness of the transducer and retainer can be kept low. This low-profile design means that the overall thickness of the telephone can also be kept to a minimum.

In a preferred embodiment, the co-operating means on the retainer comprises a plurality of connecting lugs parallel to and spaced from the annular ring which are received in the co-operating means on the housing.

Preferably, the connecting lugs are formed on the ends of spacing walls remote from the annular ring. The spacing walls depending substantially at right angles from the outer periphery of the annular ring.

Conveniently, the connecting lugs are equally spaced from each other about the annular ring.

Preferably, each lug has a tapered locking face that engages the housing when the retainer is rotated thereon.

The retainer advantageously includes spring means to apply pressure to the upper surface of the transducer to bias it against the housing when the retainer is attached thereto.

The spring means preferably comprises at least one region of the substantially planar annular ring which is deformed out of the plane of said ring, said region being deflected back toward the plane of said ring when in contact with the upper surface of the transducer and the retainer is rotated to lock it to the housing, the resilience of the or each region biasing the transducer towards the housing. This means that the retainer must be pushed downwardly against the transducer against the force of the spring pressure before it can be rotated to lock it to the housing. When the retainer is released, the lugs and the transducer are both biased into contact with the housing. This pre-loading of the transducer against the housing provides an excellent acoustic seal between the transducer and the housing, and also ensures that any vibration is transferred into the phone body so that little or no resonance is introduced into the assembly.

The housing may have a circular seat for a transducer having a cylindrical peripheral wall to surround the transducer, the co-operating means on the housing preferably comprising a plurality of sockets in the peripheral wall.

In the preferred embodiment each socket has an axially extending opening in the upper edge of the wall for insertion of a lug on the retainer, and a circumferential undercut in the wall extending from the opening to receive the lug on rotation of the retainer.

According to the present invention, there is also provided a method of attaching a transducer to an electronic device according to the invention, comprising placing a transducer on the housing, moving the retainer towards the housing and over the transducer such that the co-operating means engage, pressing the retainer against the transducer and rotating the retainer to lock the retainer to the housing and mount the transducer thereto.

A conventional mobile telephone incorporating two speakers for both conventional and "hands free" use of the telephone is provided with acoustic ducts to allow transmission of sound through the cover. The acoustic duct for the speaker having low acoustic volume is provided in the face of the cover immediately beneath the speaker and can be positioned comfortably against the ear. Even if these ducts are placed against the ear when the "hands free" mode is activated, the maximum volume of the transducer capable of relatively high acoustic volume will not be loud enough to damage the ear if this side of the telephone is held against the head. However, the acoustic ducts or openings to allow for the transmission of sound through the cover from the transducer capable of high acoustic volume are formed in the side surface of the telephone housing as, if they were formed in the face of the cover, a user may inadvertently place this side of the telephone against their head with the speaker ducts from this transducer facing the ear. As the volume of sound generated by the "hands free" loudspeaker may be quite high, this could cause them pain or injury. However, this means that an additional manufacturing step is required to form the ducts in the side of the mobile telephone housing.

According to the invention, there is provided a housing for a mobile telephone having a recess therein and a cover mounted on the housing over the recess, the cover and the housing together forming an acoustic duct in the region of the recess. This has the advantage that the acoustic duct is formed in the main face of the housing in the line of draw, rather than in the side surfaces. As the cover conceals the acoustic duct, a user is not tempted to inadvertently place this side of the telephone against the ear when the "hands free" mode is activated.

Preferably, the recess is configured such that when the cover is mounted to the housing, a sound outlet is formed in the join between the cover and the housing in the region of the recess. The aperture is most preferably a narrow slit and is largely obscured by the join between the cover and the housing to prevent a user from being tempted to place this side of the telephone against the ear.

In a preferred embodiment, the cover is arcuate in shape. This means that when the telephone is placed with the cover against a flat surface, the sound outlet is not obscured as it is spaced from the surface on which the telephone is disposed.

In another embodiment, both the cover and the recess in the housing are arcuate in shape, the recess being a concave depression in the rear surface of the housing.

Preferably, the housing has an aperture therein so that a transducer mounted on one surface of the housing is in communication with the recess on the other side of the housing.

In a preferred embodiment, the edge of the cover locates within a shoulder formed on the housing.

Preferably, the cover and housing include co-operating means for releasably mounting the cover on the housing.

The present invention also includes an electronic device according to the invention incorporating the housing of the invention.

Embodiments of the invention will now be described, by way of example only, with reference to the accompanying drawings, in which:
FIGURE 1 is a schematic illustration of a preferred embodiment of the invention in which the electronic device is a mobile telephone;
FIGURE 2 is a perspective view of the rear housing of the mobile telephone shown in Figure 1;
FIGURE 3 is an exploded perspective view of the rear housing as shown in Figure 2, but with a transducer located on the housing and the retaining ring before it is attached thereto over the transducer;
FIGURE 4 is a perspective view of the housing as shown in Figures 2 and 3, with the retainer connected to the housing over the transducer;
FIGURE 5 is an exploded perspective view of the other side of the housing shown in Figures 2 to 5, with the cover before it is attached to the housing;
FIGURE 6 is a partial enlarged view of the side of the housing shown in Figure 5, with the cover attached thereto;
FIGURE 7 is a partial longitudinal cross sectional view through the assembled mobile telephone shown in Figure 1; and
FIGURE 8 is a cross section view through the housing in the region of the recess of a modified version of the housing shown in Figures 5 to 7.

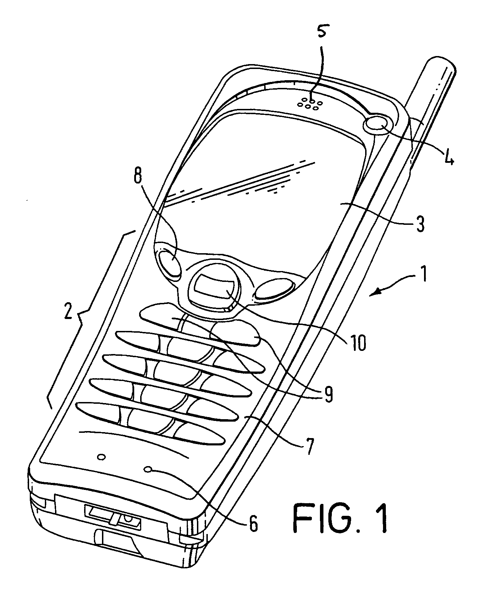

A preferred embodiment of the electronic device of the invention is a mobile telephone 1 as illustrated in Figure 1. The telephone comprises a user interface having a keypad 2, a display 3, an on/off button 4, ear piece 5 for using the telephone in a conventional manner, and a microphone 6. The telephone 1 is adapted for communication via a wireless telecommunication network, e.g. a cellular network. However, the phone could also have been designed for a cordless network. The keypad 2 has a first group 7 of keys as alphanumeric keys, by means of which the user can enter a telephone number, write a text message (SMS), write a name associated with a telephone number, etc. Each of the twelve alphanumeric keys 7 is provided with a figure "0-9" or a sign "#" or "*", respectively. In alpha mode, each key is associated with a number of letters and special signs used in text editing.

The keypad 2 additionally comprises two soft keys 8, the functionality of which depends on the state of the telephone and the navigation in the menu by means of a navigation key 10, and two call handling keys 9, which can be used for establishing a call or a conference call, terminating a call or rejecting an incoming call. The telephone 1 is also provided with a button (not shown) which enables the "hands free" mode to be activated.

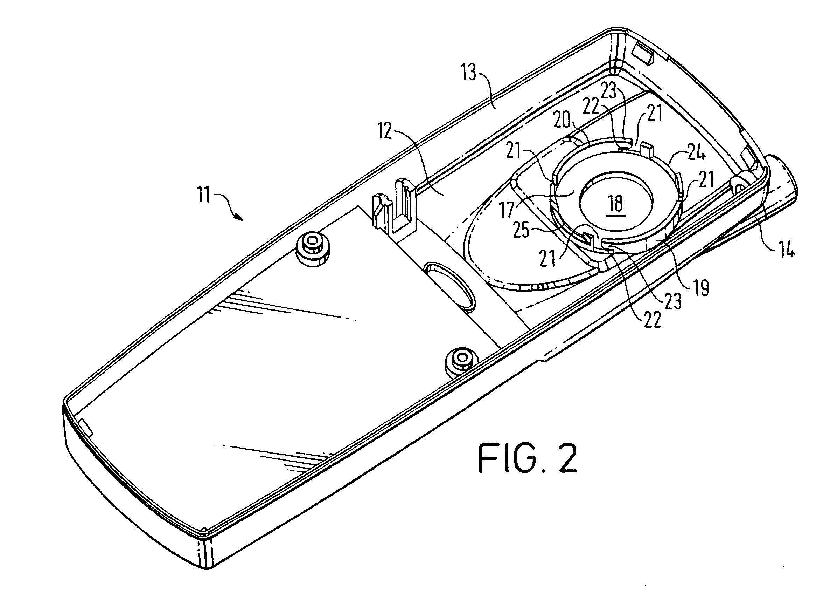

The parts of the telephone relevant to the present invention will now be described. The rear part of a mobile phone housing 11 having a rear wall 12 and side walls 13 upstanding from the rear wall 12 is illustrated in Figure 2, and provides a receptacle for the location of the various conventional components of the telephone which will not be described further. The housing 11 has an integrally moulded boss 14 through which the antenna of the telephone may extend.

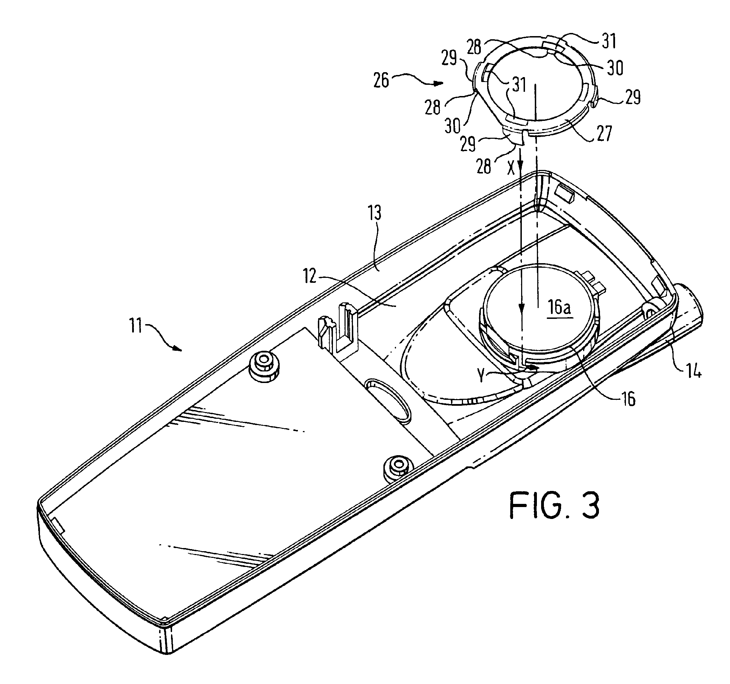

The inside face of the rear wall 12 is integrally formed with a seat to receive a transducer 16 having an upper surface 16a, illustrated in Figure 2. The transducer 16 is capable of relatively high acoustic volume and is used when the "hands free" mode is selected. The seat has an annular portion 17 against which the transducer 16 rests when placed on the housing 11 as shown in Figure 3. The annular portion 17 has an aperture 18 which acts as a duct for the transmission of sound generated by the transducer 16 through the rear wall 12 of the housing 11. The periphery of the annular portion 17 has an integrally formed upstanding wall 19 extending around its circumference having a top edge 20. The diameter of the annular portion 17 is slightly greater than the diameter of the transducer 16 which locates within the area enclosed by it on the annular portion 17.

The upstanding wall 19 has four identical and equally spaced "L" shaped sockets 21 having an opening in the top edge 20 that extends axially for a short distance and then circumferentially to form an undercut slot 22 beneath an overhanging wall portion 23. Additional sections 24, 25 of the wall are also removed to allow space for electrical connections to be made to the transducer 16.

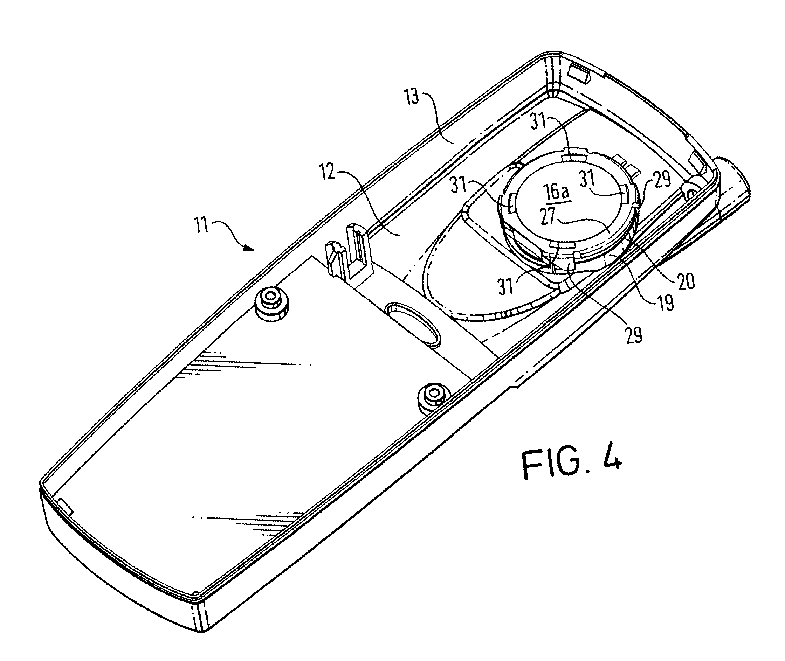

The transducer 16 is mounted on the housing 11 by a retainer 26, shown in Figures 3 and 4. The retainer 26 has a planar annular ring 27 for contact with the upper surface 16a of the transducer 16. The retaining ring 27 is provided with means for securely locking it to the housing 11 via the "L" shaped sockets 21 formed in the upstanding wall 19 comprising connecting lugs 28 extending radially inwardly parallel to but spaced from the annular ring 27 by spacing wall portions 29 that depend at right angles therefrom. The means for connecting the retainer 26 to the housing 11 are spaced equally about the circumference of the annular ring 27 so that when the retainer 26 is placed on the housing 11, in the direction of X, in Figure 3, each lug 28 is received in a corresponding socket 21.

The upper surface 30 of each connecting lug 28 which engages with the underside of the overhanging wall portion 23 is tapered so that once the retainer 26 has been placed on the housing over 11 a transducer 16, pushed downwardly against the transducer 16 and rotated so that the lugs 28 engage in the undercut slot 22 beneath the overhanging wall portion 23, the tapered upper surface 30 of each lug 28 is pressed against the housing 11 to prevent the retainer 26 from working loose.

To apply constant pressure to the transducer 16 and bias it against the housing 11, the retainer 26 includes a spring arrangement which is formed integrally with the annular ring 27, and comprises four regions 31 which are deformed out of the plane of the ring 27. When the retainer 26 is attached to the housing 11 and the tapered upper surface 30 of each lug 28 is biased against the overhanging wall portion 23, each region 31 is deflected back toward the plane of the ring 27 and the resilience of each region 31 biases or pre-loads the transducer 16 towards the annular portion 17 of the housing 11. It will be appreciated that the type of connection in which a member is inserted into a socket against spring pressure and turned so that lugs on the side of the member engage in slots in the socket is commonly known as a bayonet fastener.

The method for mounting the transducer 16 to the housing 11 will now be described. The transducer 16 is positioned on the inside face of the rear wall 12 on the annular portion 17 so that it is surrounded by the upstanding wall 19. The retainer 26 is then placed over the transducer 16 in the direction shown by X, in Figure 3, and in an orientation which ensures that the connecting lugs 28 are inserted into the sockets 21 in the wall. The retainer 26 is then attached to the housing 11 to securely mount the transducer 16 thereto by applying a downward force on the retainer 26 against the transducer 16 and then by rotating the retainer 26 in the direction of Y, in Figure 3, so that each lug 28 moves into the undercut slot 22 beneath the overhanging wall portion 23. When the downward pressure is removed, the tapered upper surfaces 30 of each lug 28 engage with the underside of the overhanging wall portion 23 and the regions 31 in contact with the upper surface 16a of the transducer 16 urge the transducer 16 against the annular wall 17 of the housing 11.

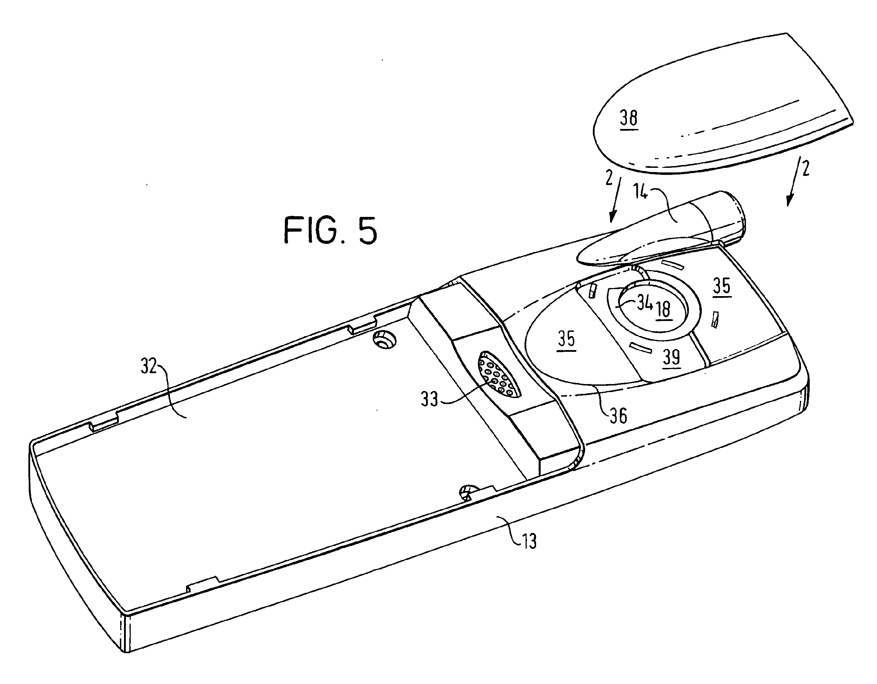

Another embodiment will now be explained with reference to Figures 5, 6 and 7. It will be appreciated that this embodiment need may or may not be combined with the first embodiment described with reference to Figures 2 to 4. However, it is envisaged that both embodiments will be used together.

Figure 5 illustrates the opposite side of the housing 11 shown in Figures 2 to 4. The boss 14 for the antenna can be seen, as can a battery chamber 32. The battery chamber 32 has a casing (not shown) that fits on the housing 11 and engages with detent 33 thereon.

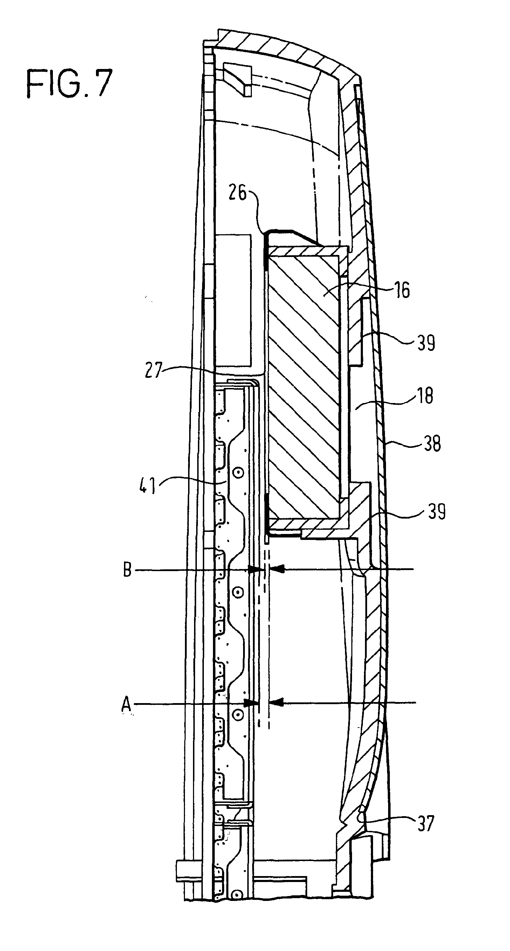

On the upper part of the housing 11 the rear face 34 of the annular wall 17 can be seen with the aperture 18 therethrough. The housing 11 has an outwardly projecting bulbous section 35 surrounding the aperture 18 that extends from the top edge of the housing 11 and tapers to just above the detent 33. The edge 36 of the bulbous section 35 starts from slightly below the rear surface of the housing 11 to form a shoulder 37 (see Figure 7) to receive an outwardly curved arcuate cover 38 so that it is flush with the rear surface of the housing 11 when fitted thereto, as most clearly seen in Figure 7. A substantially rectangular depression or recess 39 in the surface of the bulbous section 35 extends transversely across it and terminates on opposite edges 36. The aperture 18 communicates the transducer 16 with the depression 39.

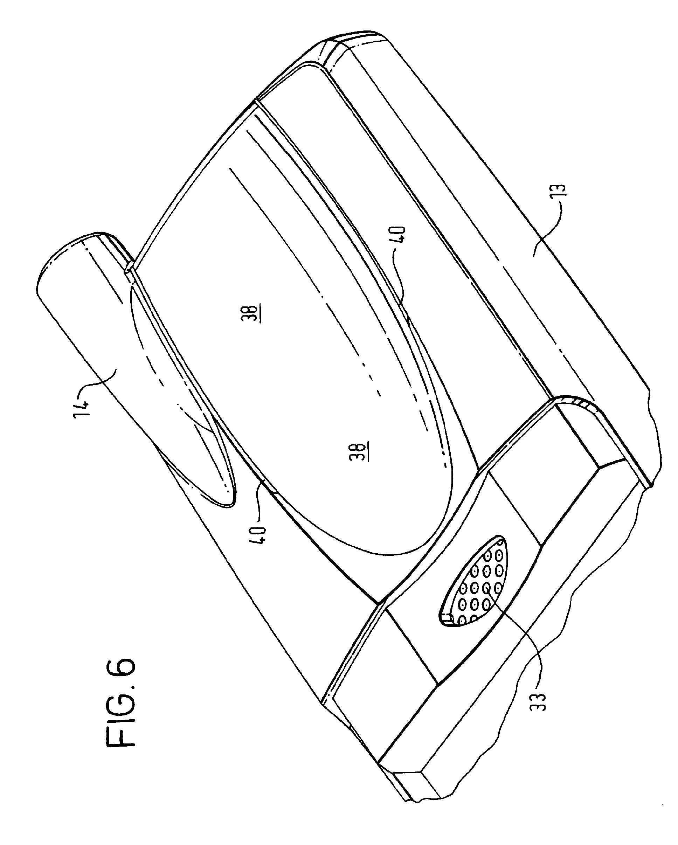

The cover 38 is attached to the housing 11 over the bulbous section 35 by pressing it onto the housing 11 in the direction of Z in Figure 5 so that it seats within the shoulder 37. As most clearly shown in Figure 6, when the cover 38 is fitted to the housing 11, a narrow opening or slit 40 between the edge of the cover 38 and the housing 11 is created in the region of the depression 39. This opening 40 allows sound generated by the transducer 16 to pass through the aperture 18, along the space between the depression 39 and the cover 38 and through the opening 40 to the outside. The depression 39 and the cover 38 together form an acoustic duct, the opening 40 being the outlet for the duct. As the outlets 40 are formed in the joint between the cover 38 and the housing 11, they are concealed or disguised so the user is not tempted to place this side of the housing 11 against their ear, which they might otherwise have done if the acoustic outlets had been more visible and which could result in pain or injury to the eardrum if the telephone is in "hands free" mode. Furthermore, as the cover 38 is bulbous, it is uncomfortable to hold against the ear.

Figure 7 illustrates a partial view of an assembled mobile telephone in which the transducer 16 is mounted to the housing 11 using the retainer 27. The recess 39 over which the cover 38 extends to form an acoustic duct can be clearly seen. PCB components 41 are mounted to the front portion 42 of the housing 11 and the distance between the top of the transducer 16 and the PCB components 41, indicated by A in Figure 7, is 0.5mm. The thickness of the annular ring 27 in contact with the upper surface 16a of the transducer 16 is 0.2mm, as shown by B in Figure 7, leaving a space between the annular ring 27 and the PCB components 41 of 0.3mm. The use of the retainer 26 to mount the transducer 16 is clearly advantageous as it does not require an increase in the size of the gap between the PCB components 41 and the transducer 16 to accommodate it. Therefore the overall thickness of the mobile telephone can be kept to a minimum.

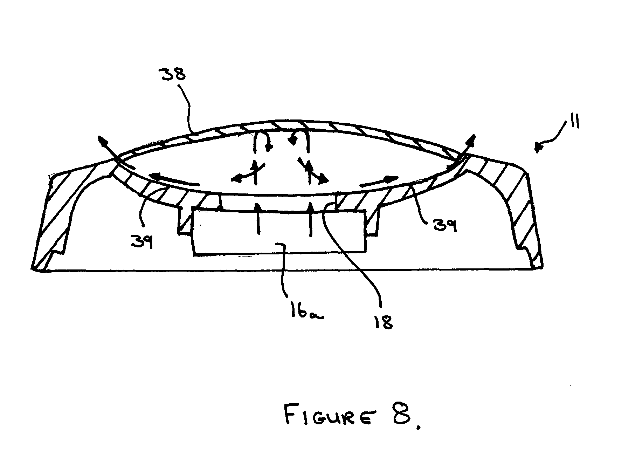

A modified arrangement of the embodiment described above with reference to Figures 5, 6 and 7, is illustrated in Figure 8 which shows a cross section through the housing in the region of the recess 39. In this modified embodiment, it can be seen that the recess 39 is arcuate in shape to form an inwardly directed or convex depression in the rear surface of the housing 11. This ensures that the sound passing through the acoustic duct and out through the opening 40 is acoustically "clean", i.e. there is a minimum number of sharp edges or flat faces to obstruct the sound waves passing through the duct, as shown by the arrows in Figure 8.

## Claims

1. An electronic device comprising a housing, a transducer and a retainer for mounting the transducer on the housing, the housing and retainer including co-operating means for attaching the retainer to the housing over the transducer.

2. A device according to claim 1, wherein the co-operating means are configured so that, when the retainer is placed on the housing over the transducer with said co-operating means in engagement, rotation of the retainer attaches it to the housing and mounts the transducer thereto.

3. A device according to claim 2, wherein the retainer is attached to the housing by means of a bayonet type fitting.

4. A device according to claim 3, wherein the retainer has a substantially planar portion for contact with the upper surface of the transducer.

5. A device according to claim 4, wherein said substantially planar portion is an annular ring.

6. A device according to claim 5, wherein the co-operating means on the retainer comprises a plurality of connecting lugs parallel to and spaced from the annular ring which are received in the co-operating means on the housing.

7. A device according to claim 6, wherein the connecting lugs extend from the ends of spacing walls depending substantially at right angles from the outer periphery of the annular ring.

8. A device according to claim 7, wherein said lugs are spaced equally from each other about the circumference of the annular ring.

9. A device according to claim 7 or 8, wherein each lug has a tapered surface for engagement with the housing when the retainer is attached thereto.

10. A device according to any of claims 7 to 9, wherein the retainer includes spring means for biasing the transducer and the connecting lugs against the housing when the retainer is attached thereto.

11. A device according to claim 10, wherein the spring means comprises at least one region of the substantially planar annular ring which is deformed out of the plane of said ring, said region being deflected back toward the plane of said ring when in contact with the upper surface of a transducer and the retainer is rotated to attach it to the housing, the resilience of the or each region biasing the transducer towards the housing.

12. A device according to any preceding claim, wherein the housing has a circular seat for the transducer including a cylindrical peripheral wall to surround the transducer, the co-operating means on the housing including a plurality of sockets in the peripheral wall.

13. A device according to claim 12, wherein each socket has an axially extending opening in the upper edge of the wall for insertion of the co-operating means on the retainer, and a circumferential undercut in the wall extending from the opening to receive the co-operating means on the retainer upon rotation thereof.

14. A mobile telephone comprising the device according to any of claims 1 to 13.

15. A method of attaching a transducer to an electronic device according to any of claims 1 to 13, comprising placing the transducer on the housing, moving the retainer towards the housing and over the transducer such that the co-operating means engage, and rotating the retainer to connect the retainer to the housing and mount the transducer thereto.

16. A housing for a mobile telephone having a recess therein and a cover mounted on the housing over the recess, the cover and the housing together forming an acoustic duct in the region of the recess.

17. A housing according to claim 16, wherein the housing has an aperture therein so that a transducer mounted on one surface of the housing is in communication with the acoustic duct on the other side of the housing.

18. A housing according to claim 16 or 17, wherein the edge of the cover locates within a shoulder formed on the housing, wherein the recess extends across the housing so that a portion of the edge of the cover in the region of the recess is not in contact with the housing to form an outlet.

19. A housing according to claim 18, wherein the cover is arcuate in shape.

20. A housing according to claim 19, wherein the recess is arcuate in shape to form a concave depression in the rear surface of the housing.

21. A housing according to any of claims 18 to 20, wherein the outlet is a narrow slit in the joint between the cover and the housing.

22. A housing according to any of claims 16 to 21, wherein the cover and housing include co-operating means for releasably mounting the cover on the housing.

23. A housing according to any of claims 16 to 22, wherein the cover is made of metal.

24. An electronic device according to any of claims 1 to 13 and a housing according to any of claims 16 to 23.

25. A mobile telephone comprising an electronic device according to any of claims 1 to 13 and a housing according to any of claims 16 to 23.

26. A device substantially as hereinbefore described with reference to the accompanying drawings.

27. A housing substantially as hereinbefore described with reference to the accompanying drawings.
